# EUROPEAN PATENT SPECIFICATION

(11) **EP 3 082 122 B1**
(45) Date of publication and mention of the grant of the patent: **25.07.2018**
(21) Application number: 16165246.6
(22) Date of filing: 14.04.2016
(51) Int. Cl.: G09B 9/00, A63G 31/00

(54) **APPLIED LAYOUT IN VIRTUAL MOTION-ACCELERATION SPHERICAL SIMULATOR**
ANGEWANDTES LAYOUT IN VIRTUELLEM SPHÄRISCHEN BEWEGUNGSBESCHLEUNIGUNGSSIMULATOR
DISPOSITION APPLIQUÉE DANS UN SIMULATEUR SPHÉRIQUE À ACCÉLÉRATION VIRTUELLE DE MOUVEMENT

(30) Priority: 17.04.2015 BR 202015008770 U
(43) Date of publication of application: 19.10.2016
(73) Proprietor: Motion Sphere Desenvolvimento de Technologia e Locaçao Ltda EPP, 81350-010 Curitiba (BR)
(72) Inventor: EDWIN MASUTTI, Jefferson, CEP: 81350-070 Curitiba / Paraná (BR)
(74) Representative: Lorente Berges, Ana

(56) References cited:
- EP-A2- 1 033 564
- US-A- 2 046 202
- US-A- 3 135 057
- US-A- 3 295 224
- US-A- 4 824 099
- US-A- 5 060 932
- US-A- 5 372 505
- US-A- 5 725 435
- US-A1- 2012 083 347

## Description

### Presentation

Reference is made to the given model to technical field of simulators for education, training, gaming, amusement and leisure purposes, in which the players may control land, aquatic and air vehicles, among other modalities, mainly the layout applied in virtual motion-acceleration spherical simulator, which highlights its recent features as follows: the operator and its navigator positioning in single quadrants, which means, each person takes one seat from the eight quadrants from the sphere, such arrangement, enables the generation of the motion accelerations in the whole body into the same direction, triggering a real life stimulus sensation according to the game motion, as the opposite as found in different models in the current technique, where the operator is positioned across the quadrants (the upper body part stands in central line of the sphere and the lower body part, below such line), according to such arrangement, the head shakes to one side while the body to the other, causing disorientation in the occupants, nausea and other conditions; another innovative feature of this model is the use of one sphere as, reduction pulleys, which is performed through the use of belts which covers the entire diameter of the two rims, which comprises the sphere and a geared motor for each axis, then, it disposes the use of a very large and powerful engine to perform the movements, as per the current praxis technical status.

Aside from the given features profile, this gear is driven to a high level of disconnection between the average simulator player to the real world, immerging to sensations inherent to the game itself such as 3D audiovisual effects, rumble pack effects, dynamic ventilation adjusted by the speed, force-feedback to steer, real environment for the cockpit equipped with real instrument dashboard simulating de speed information, engine rotation, as much as a vehicle dashboard, full footswitch, H-designed profile gear box, motor sport bucket seats with 4-point safety buckles and the lateral and longitudinal sided sensation of motion- acceleration of the vehicle during the race, all of this inside a sphere enabling the sensation of real life pilot without being exposed to actual risks inured from real life operation.

The game type is freely chosen by the operator, provided that operates on a PC, since the system uses the internal variable game set, in order to generate respective simulations in the real life world, according to each player's movement. Up to this end, four micro-controlled devices operate in-sync with distributed processing, controlling the various simulations and maintaining the device functional and safe (according to current regulations) during the race.

### History.

As per the escalating share of the media market in which the electronic games have taken place, it is noticed the need for hardware systems capable of turning into increasingly real user experience.

The above mentioned experience can be commercially exploited when it has systems that will enhance the immersion in the media as 3D displays, controllers (steering wheels, joysticks and other customized input devices for games) and acceleration simulators.

The industry of motion-acceleration simulators is growing fast, let alone it has become a tad in elite levels due to the high cost, forcing enthusiasts to create their own "home-made" simulators not even close to enterprises such as pinsphere parks, these systems are accessible. A example of motion-acceleration simulator is given in the patent US5060932.

Both pilots as for beginners, enthusiasts and "gamers", a simulation system can provide a safe way to experience the situations "in race" in which a pilot with experience experiences during a race and develop or improve certain driving skills in drifting, hitting brakes, in wet tracks, in different terrains, loss of control, rollovers and collisions as well as to improve reflexes while driving.

Such simulations are required for drivers, driving schools and even for simple entertainment, thus it is necessary to endeavor to an industry solution as much capable of simulating quality as these situations affordable for training centers, driving schools and even companies in entertainment, arcades or parks.

### Technical and problem status.

The driving simulators has its origin in flight simulators where the forerunners in the virtual reality of the industry created the first motion simulator 3-axis (rotation in x, y and z displacement) and without audiovisual device simply to instruct their students with sensations which would be similar during real flights as per D. M. Haward (1910) in "The Sanders Teacher".

A range of motion-acceleration simulators were created and even used in World War II, but only in the 60s it initiated using computers for the motion experience as coupled to the audio visual. Further details on this approach can be found at Flight Simulation - J. M. Rolfe (1986).

Only in the 80s the cars simulators began to enter the market with the development of HYSIM (Highway Driving Simulator), a fixed-base simulator which served to improve the perception of traffic control devices.

From that time on, evolution continued and the models as of today are so many that can be classified in two parameters: as for the freedom graded-level and the operator position in terms to motion-driven axes.

As per the technical knowledge from the subject there are several systems and simulators models. These include: fixed base simulators; vibration-based; the rotables; the tray ones; the robotic cage; and spherical.

### Fix-based simulators

One of the first to be developed is described in US2046202A, "optical projection apparatus". The fixed-based simulators are motion-free equipment and have its objective only to audiovisual experience as well as the sensation of direction by environment immersion, without acceleration.

### Vibration-based simulators

There are simulators with actuator device of some kind of eccentric rotation or other form of device capable of generating vibration frequencies and intensities variables simulating thus difficult terrain, light impacts or even vibrations of the engine.

These are systems usually very simple in a low level of immersion simulate only a small portion of environmental variables. An example is described in US5372505A "vehicle simulator".

### Rotables simulator

It is already considered motion simulators with three axes of space, using the operator's rotation on the axis itself, i.e. the rotation axis is below the seat. Thus, the simulation of the acceleration is done by tilting the operator for the desired direction. It is certainly the cheapest accelerations simulation method, but it lacks at the beginning of the movement and short duration accelerations, as because the displacement as required to generate the desired acceleration causes, the operator, in its early motion strikes acceleration in the opposite direction. For instance an example as described in US4464117 "driving simulator apparatus".

### Tray simulator

These are simulators of at least 3 axes of space in which the operator sits on a sliding tray. This is a high fidelity performance simulation model since there is no movement it does not simulate because it allows displacement and rotation in either x, y or z. It can be as per the following structured profiles:
- Stewart's platform - hexapod support system enabling displacement and rotation in three axes by hydraulic or pneumatic pistons, or electromechanical actuators prism-shaped fixed according to Stewart D. (1965). The world's best simulators still operate with such system; and
- Robot crane - a tray system where the support is made via cables (the system hangs) instead of pistons. It allows smaller accelerations to be connected to the platform of weight during the descent, but with greatly reduced cost.

A template from tray simulator, is described at US3295224 "motion simulator".

### Robotic cage simulators

Simulators which have a full motion towards all directions with great speed and motion range. These devices are typically used for the simulation of extreme acceleration and endurance tests for fighter pilots and astronauts. It is a cage attached to the gripper of a 6-axis robot with a program that instead of seeking the desired position, it analyzes the current position and generates a trajectory to simulate acceleration which can reverse the cage to get the desired acceleration even when it is stroke limited from the robotic structured frame. Projected trays tends to be cheaper projects, but with a much more complex implementation. An example is described in US6131436 "method and system for wear testing a seat by simulating human seating activity and human body simulator for robotic use therein."

### Spherical simulators

The spherical simulators generally have three rotation axes, which enables rotary movements into any direction. As per such segment we may consider it:
- US 5725435 "electro-mechanical amusement simulator with gravitational effects" which is provided with a central circular base, which is supported an arc with lateral engines and a central ring provided with a sphere of transparent material and disposed chair symmetrically centered where the arc rotates laterally the central ring and the central ring rotates in rotary motion clockwise and counter¬clockwise;
- US 2012/0083347 "space orientating mechanism with two tetrahedrons and eight arc-links", such invention provides a series of semi intertwined arches and geared with motors, which enable the implementation of several rotating movements. The structure of such machine is extremely complex and expensive, making it practically impossible in terms of cost compared to the proposed model;
- US 5060932 "amusement apparatus having Rotary capsule", describes and claims a fun machine with rotating capsule, which is driven by motors with bevel gear drive rings. That being completely different drive mechanism of the proposed model.

According to the analysis of such models we can observe the positioning of the occupant are meant for the vertical axis and between the horizontal axis. This arrangement provides the operator disorientation and your navigator, making they become disoriented, dizzy and nauseous.

### Enhanced updates presented in technical status

The model in question differs completely from fixed base simulators, the vibration, the rotables, the tray and robotic cage. However, following the same line of the spherical simulators it renders a gyroscope system.

The main differences and advantages over spherical simulators are in the position of the occupants (operator and navigator), which are positioned within individual quadrants i.e., each user occupies only one of the eight quadrants of the sphere. A solution which provides acceleration for the whole body to the same side and then, the operator feels the same sensations of driving in a real race, since it does not cause nausea and even distemper.

Another advantage or differential, is in the drive system of the sphere rings which rotate towards the core capsule, which lacks the use of large and powerful engines.

As per such arrangement the position of the occupants and the provision in the drive mechanism, the model ensures its place in the simulator market to exhibit such level of immersion with sales figures far below the others that reach the same level and quality far superior to the rotable, lifts or vibrant simulators.

### Model layout

Reference is made to this model, the simulators for virtual games in general, more specifically to arrangements applied in spherical simulator geared with virtual motion-accelerations, which is formed by a booth/spherical cockpit equipped with a display device formed by a projector Full HD 3D which displays the game image on a curved screen simulating the windshield and a 3D kit glasses; a controller device, consisting of force feedback steering wheel, pedals, gear, hand brake and auxiliary keyboard; an audio device with sound system with 7.1 channels, in order to create an immersion over the realistic sound atmosphere; a real vehicle dashboard, allowing real-time monitoring of speed, RPM, current gear, among other information and effects; motor sport bucket seats with 4-point safety buckles; cameras and hoods, which vary the airflow according to the vehicle speed; a structural base profile beams "H" shaped, formed by two lateral support columns, which is supported and rotated concentrically outside the sphere which surrounds and supports the inner concentric sphere and the spherical capsule; an arrangement in internal structure of the cabin/cockpit, which is formed by a circular base screwed on the intersections of the rims of the inner concentric sphere; being comprised of a provision in the position of the occupants where the operator is positioned in one of the eight quadrants of the spherical cabin and the navigator in a second quadrant, in this arrangement, both the operator and the navigator, to stay in the sitting position, they are practically within their quarters, leaving only part of his legs in front lower quadrants, since the head is below or at the same level as the horizontal center rim, causing the body to move entirely in the same direction; and by the provision in the mechanisms of rotation of the gyroscopic spheres, which are composed of a drive assembly of the outer sphere which performs the longitudinal movement "Y", this being formed by a motor that is coupled to a lower container, provided internally a gear unit with a toothed pulley (coupled to the motor) and two flat pulleys, wherever pierces, and rotates a toothed belt which pulls the vertical collar of the outer sphere which functions as a large reduction pulley, and such belt attached by its ends at the top of the rim via two turnbuckles, which are fixed in the upper housing of the internal sphere drive assembly which accomplishes the lateral movement "X", and this assembly equipped with a motor, a gear with a toothed pulley and two flat pulleys, whereby the toothed belt is tensioned, which surrounds the vertical rim of the inner sphere which functions as a large reduction pulley.

The model also features a control device, comprising the use of a computer to run the game and extractor software which is in charge of capturing the correct variables and send via digital protocol to the simulator; a central controller with micro-controlled system, which receives the acceleration variables and distributes to the axis controllers; X and Y axis controllers, which receives the central acceleration variation and generates a drive signal for controlling the movements via PID; set of actuators, which include slave drive, slave motor, reducer, position sensor and other sensor devices, allowing closed loop motion control; video devices, which includes a Full HD 3D projector that receives the image and PC sync signal, and generates the game image on a curved screen that simulates the windshield, along with 3D glasses; control devices, with G27 input system with a force feedback steering wheel, pedals and exchange closer to the actual possible direction; an audio device with sound system to create an immersive and realistic sound atmosphere, with 7.1 channel; a controlling vehicular instruments, which receives the speed variable, engine speed and current gear and generates the corresponding signal to the instrument dashboard; and the simulator dashboard instruments that allow visualization and real-time monitoring of speed, RPM, current gear, and other information relating to the vehicle.

### Clockwork

The simulator consists of two concentric spheres which follow the principle of the gyroscope and the due printed operator acceleration, through its rotation, driven by a micro distributed controlled system that supervises the entire process.

The rotation of the spherical capsule is made by rotating the rings of spherical gyroscopic outer and inner concentric with an outer sphere used to rotate the directions of front and rear elevation and the internal sphere used to rotate the lateral directions. The rims of the outer and inner spheres act as two large reduction pulleys, each engaged by a toothed belt, secured by the ends to two stretching devices, and rotated by two sets of drive, comprising a motor, a gear and a pulley toothed traction.

Immersion becomes even better when the operator is not aware of the rumble conditions, it takes place when the sphere is closed and the smooth acceleration ramps to maintain an acceleration of up to 7g, using the acceleration of the rotation to start the movement, impact and gravity itself to keep it for as long as necessary.

In order to provide audio-visual experience, it has a 3D projector which displays a high definition image, for adjusting the curvature and then a curved screen which covers more than 90% of the pilot's field of view, while it is immersed in a 3D sound system with High definition Surround 7.1-channel.

The simulator also has a genuine and dynamic dashboard installed just below the screen which will display the vehicle speed, RPM, current gear and some other information and effects inherent to the vehicle.

The interaction with the simulation software is made with a controller, equipped with a steering wheel control position encoder and motor slave to generate feedback vibrations and forces (equipped in the vehicle dashboard), one pedal with clutch, brake and accelerator (equipped in the platform just below the dashboard) and a 6-speed shift reverse positional gear box (located next to the bank).

For proper safety issues compliance, the system comprises with a proper control operation of each of the cards dealt to each update cycle and a redundant emergency channel and positive action linked to each plate and a mushroom button type field operator performance, which instantly cuts the channels between the drives and motors. There is also a 4-point safety buckles provided to improve safety, since the system rapidly varies into the direction of acceleration and reaches 270 degrees of rotation.

In order to speed up there is an update without an increase in cost, it developed a distributed processing system enabled to update the control cycle in every 5ms. This update rate allows more efficient basis to simulate the accelerations with minimum possible delay causing a more real feeling to the operator.

The USB conversion is done using a FTDI-232 can convert USB controller for serial also sending all control signals, since they will be used for the I2C network.

The serial signal must be sent to the main controller which will separate the information for each axis and send to their respective parent companies through a second network, I2C.

Each parent, to receive and recognize your address, initializes an interrupt to the receipt of information and in addition to receiving controls its axis to position it in the new quota.

All signals and inherent alerts to each axis must be controlled by its respective controllers as well.

### Performance

The sensory illusion of displacement and rotation through the 4 missing axes was reached and one can see the existence of rotation and displacement on the Z axis with greater intensity to realize the actual displacement or acceleration in X and Y. This is due to the displacement of position of the operator about the sphere rotation center.

The displacement of the operator to bring the rotation of the outer shaft shaft, allows, when this moves clockwise, there is a sense of displacement Z + while there is a sensation of braking of the vehicle, but when this displacement is small and in conjunction with rotation Y, the feeling is just passing over a bump in the road.

Such displacement is real and interpolated with the rotation of the original shaft. Once this has only takes place by the rotation axes of X and Y, Z axis acceleration data is inserted in the form of a modulated signal on the X and Y command, and generating a sense of Z.

The targets, advantages and other important characteristics of the model in question can be more easily understood when read in conjunction with the drawings attached, in which:
Figure 01 is a perspective view of the applied layout in virtual motion-acceleration spherical simulator, in the open layout.
Figure 02 is a perspective view of the applied layout in virtual motion-acceleration spherical simulator, in the closed layout.
Figure 03 is a side view of the applied layout in virtual motion-acceleration.
Figure 04 is a schematic side view of the operator's positioning and navigator in the simulator.
Figure 05 is a schematic top view of the operator's positioning and navigator in the simulator.
Figure 06 is a schematic rear view of the operator's positioning and navigator in the simulator.
Figure 07 is a front view of the provisions applied in spherical simulator virtual accelerations.
Figure 08 is a perspective view of the support base and the rotating mechanism of the outer sphere which performs the longitudinal movement.
Figure 09 is a perspective view of the inner spheric rotation mechanism which performs the sideways movements.
Figure 10 is a front section of the rotation mechanism.
Figure 11 is a view in perspective tractor timing belt.
Figure 12 is a perspective view of one side of the support base simulator.
Figure 13 is a diagrammatic view of the blocks of the control system of the simulator.

### Detailed figures description

As per the figures enclosed, it displays and integrate the current descriptive report upon the reviewed model of "Applied Layout in Virtual Motion-acceleration Spherical Simulator", it is entitled as a simulator for virtual games in general, specifically driven to applied layout in virtual motion-acceleration (1) spherical simulator, which is equipped with a booth/spherical cockpit (1A) equipped with a display device formed by a projector Full HD 3D (D) which displays the game image on a curved screen (E) simulating the windshield and a 3D kit glasses; a controller device, consisting of force feedback steering wheel, pedals, gear, hand brake and auxiliary keyboard; an audio device with sound system with 7.1 channels, in order to create an immersion over the realistic sound atmosphere; a real vehicle dashboard (1B), allowing real-time monitoring of speed, RPM, current gear, among other information and effects; motor sport bucket seats with 4-point safety buckles (1C); cameras and hoods, which vary the airflow according to the vehicle speed; a structural base profile beams "H" (2) shaped, formed by two lateral support columns, which is supported and rotated concentrically by the outside the sphere (3) which surrounds and supports the inner concentric sphere (4) and the spherical capsule (1A); an arrangement in internal structure of the cabin/cockpit, which is formed by a circular base (5) screwed on the intersections of the rims of the inner concentric sphere (4); being featured by a provision in the position of the occupants where the operator is positioned in one (Q) of the eight quadrants of the spherical cabin and the navigator (B) in a second quadrant (Q1), in this arrangement, both the operator and the navigator, to stay in the sitting position, they are practically within their quarters, leaving only part of his legs in front lower quadrants, since the head is below or at the same level as the horizontal center rim, causing the body to move entirely in the same direction; and by the provision in the mechanisms of rotation of the gyroscopic spheres (3) and (4), which are composed of a drive traction assembly (6) of the outer sphere (3) which performs the longitudinal movement "Y", this assembly being formed by a motor (6A), which is coupled to a lower container (6B), provided internally a reduction gear unit (6C) with a toothed pulley (6D) (coupled to the engine) and two flat pulleys (6E), where it pierces and rotates a toothed belt (6F), which pulls the vertical rim (3A) of the outer sphere (3), which functions as a large reduction pulley, and such belt attached by its ends at the top of the rim via two turnbuckles (7), which are fixed in the upper housing (8B) of the drive traction assembly (8) from the internal sphere (4) which accomplishes the "X" lateral movement, and this assembly equipped with an engine (8A), a reduction gear (8C) with a toothed pulley (8D), and two flat pulleys (8E), whereby the toothed belt is tensioned (8F), which surrounds the vertical rim (4A) of the inner sphere (4) which functions as a large reduction pulley.

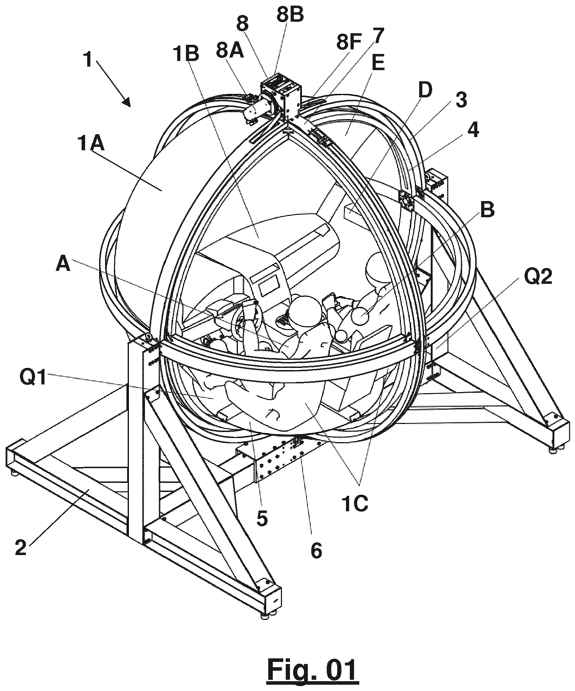

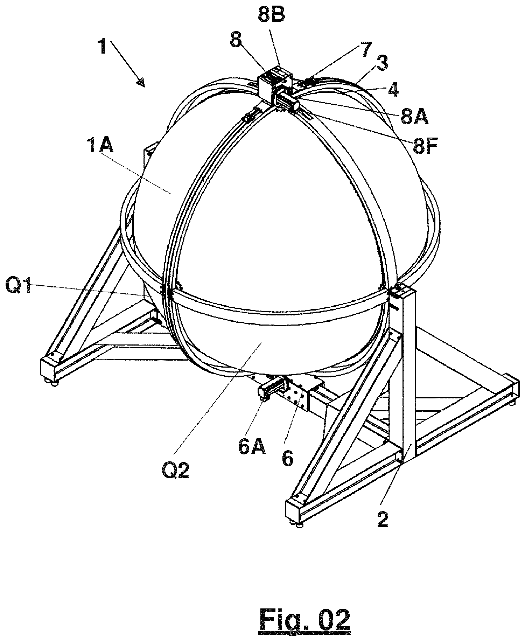

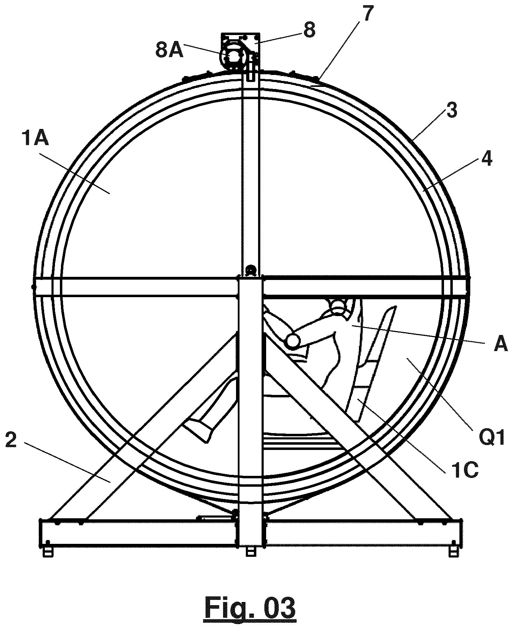

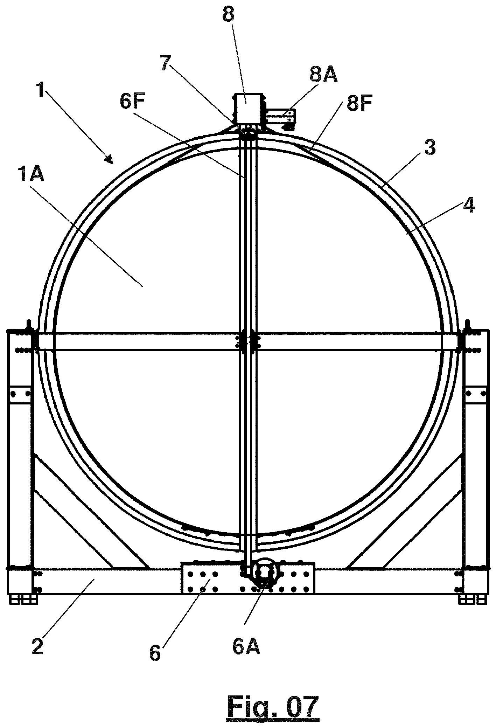

In figures 01, 02, 03 and 07 it displays the spherical simulator for virtual montion-acceleration (1), which is evidenced a booth/spherical cockpit (1A) equipped with a display device formed by a projector Full HD 3D (D) which displays the game image on a curved screen (E), a real automotive dashboard; a real vehicle dashboard (1B), allowing real-time monitoring of speed, RPM, current gear, among other information and effects; motor sport bucket seats with 4-point safety buckles (1C); a structural base profile beams "H" (2) shaped; a concentric outside sphere (3); the inner concentric sphere (4); circular base (5) screwed on the intersections of the rims; the operator (A) is positioned in one (Q) of the eight quadrants of the spherical cabin and the navigator (B) in a second quadrant (Q1); the drive traction assembly (6) of the outer sphere (3) formed by the motor (6A), the lower casing (6B) with the gear, the toothed pulley, the two flat pulleys, the toothed belt (6F) and stiffeners (7); the set of traction (8) of the inner spherical (4), the motor (8A), the gear, the toothed pulley, the pulleys and two flat toothed belt (8F).

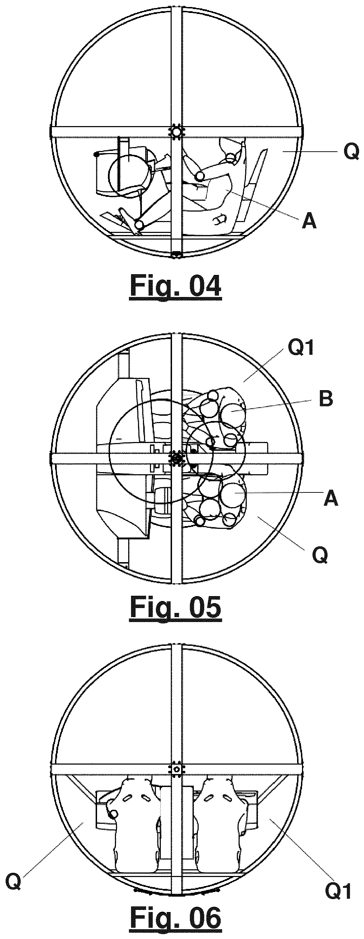

In figures 04, 05 and 06 there are shown the positions of the operator (A) in the quadrant (Q) and the navigator (B) in the quadrant (Q1), the eight quadrants of the spherical booth, where only part of the legs and feet are in the lower front quadrant. Because of this position, the body of the occupants move entirely in the same direction, and thus they have complete control over the spherical movements, besides feeling any acceleration, as if they were actually driving the vehicle.

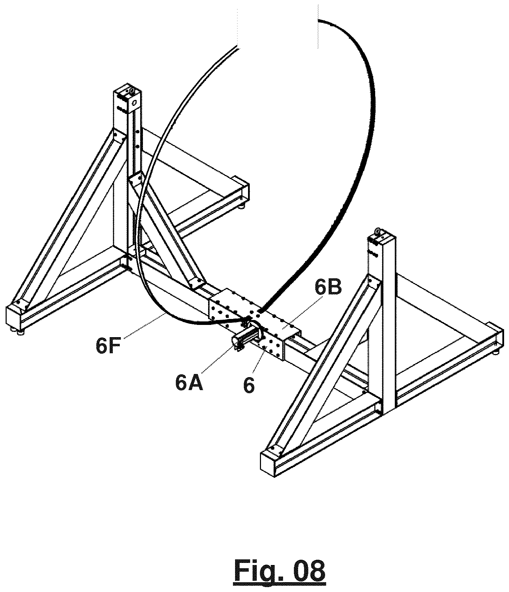

Figures 08, 09 and 010 are shown sets of traction (6) and (8), where are shown the motor (6A) and (8A), the lower casing (6B) and upper (8B), reducers (6C) and (8C) with toothed pulleys (6D) and (8D), and two flat pulleys (6E) and (8E) represented in the same figure in section 010; toothed belts (6F) and (8F) and stiffeners (7).

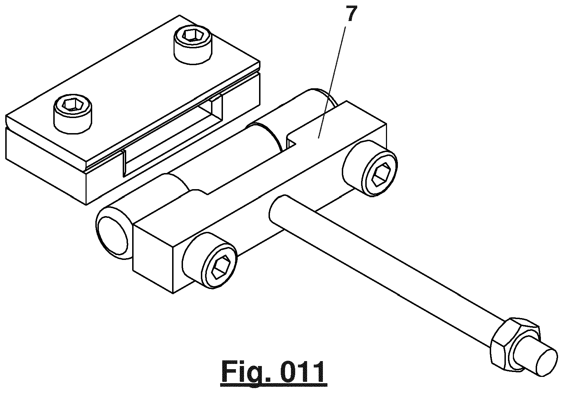

Figure 11 shows one of the turnbuckles (7) of toothed belts.

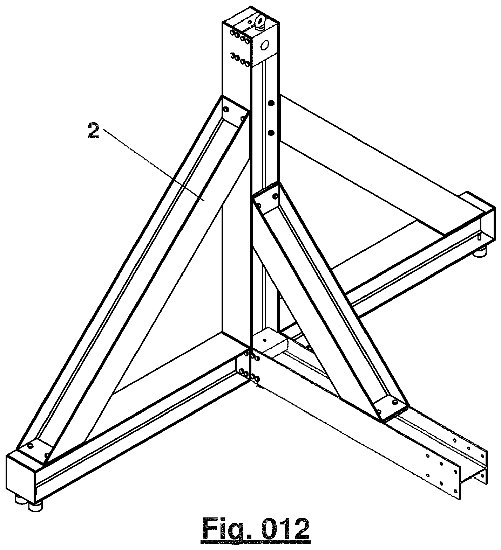

Figure 12 shows the provisions of one of the support base of the sides (2).

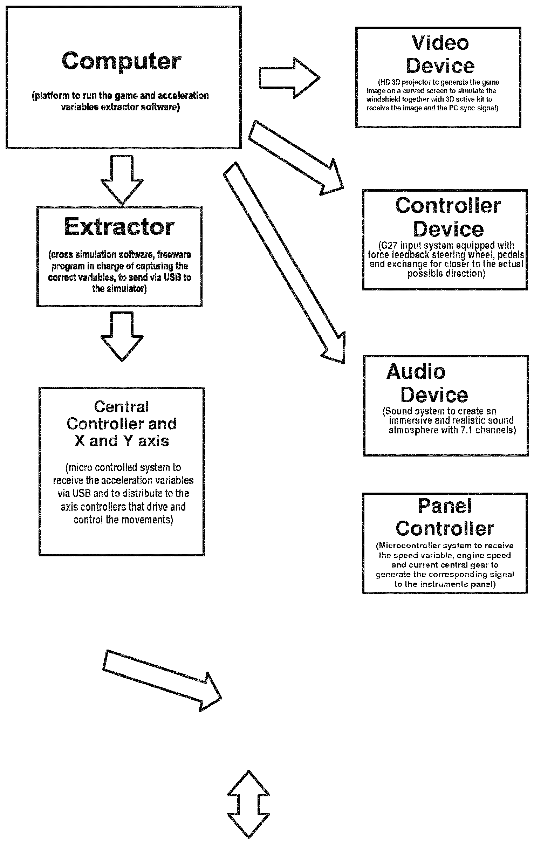

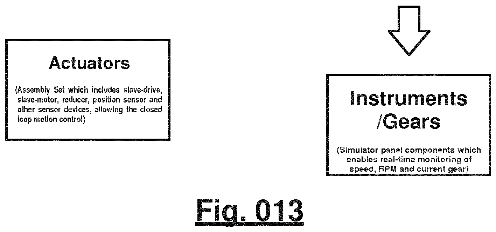

Figure 13 shows the layout of one of the support base of the sides (2).

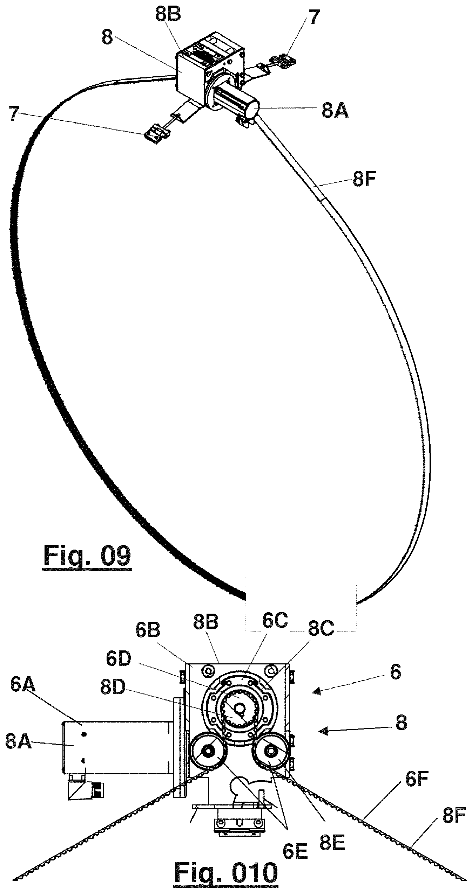

Figure 10 shows the diagram in control blocks, which are evidenced by the computer; Extractor software; the central controller (9); X and Y axis controller; the actuators (10); video devices; the controller devices; the audio device; the controller of the panel; and the instrument panel.

According to the model, the automobile dashboard with steering wheel, pedals and gears may be replaced by panels and other controls that simulate other types of games (e.g. Aircraft, spacecraft, ships, etc.), keeping other predominant features.

## Claims

1. Virtual motion-acceleration spherical simulator (1) formed by:
a spherical cockpit (1A) equipped with a display device formed by a projector Full HD 3D (D) which displays a game image on a curved screen (E) simulating a windshield and 3D kit glasses;
a controller device, consisting of force feedback steering wheel, pedals, gear, hand brake and auxiliary keyboard;
an audio device with sound system with 7.1 channels, in order to create an immersion over the realistic sound atmosphere;
a real vehicle dashboard (1B), allowing real-time monitoring of speed, RPM, current gear;
motor sport bucket seats with 4-point safety buckles (1C);
cameras and hoods, which vary the airflow according to the vehicle speed;
a structural base having "H" shaped beams (2), formed by two lateral support columns rotatably supporting an outside concentric sphere (3) which surrounds and supports an inner concentric sphere (4) and the spherical cockpit (1A);
where an internal structure of the spherical cockpit (1A) is formed by a circular base (5) screwed to the intersections of the rings of the inner concentric sphere (4);
**characterized in that** an operator is positioned in one (Q) of the eight quadrants of the spherical cockpit (1A) and a navigator (B) is positioned in a second quadrant (Q1) of the spherical cockpit (1A), such that both the operator and the navigator, while remaining in the sitting position, are essentially within their quadrants, only part of their legs being located in front lower quadrants, since the head is below or at the same level as a horizontal center ring, causing the body to move entirely in the same direction;
and **in that** the mechanisms of rotation of the gyroscopic spheres (3) and (4) comprise a drive traction assembly (6) of the outer sphere (3) which performs a longitudinal movement "Y", said assembly (6) being formed by a motor (6A), which is coupled to a lower container (6B), provided internally with a reduction gear unit (6C) having a toothed pulley (6D) coupled to the engine and two flat pulleys (6E), where it pierces and rotates a toothed belt (6F), which pulls the vertical ring (3A) of the outer sphere (3), which functions as a large reduction pulley, and such belt being attached by its ends at the top of the ring via two turnbuckles (7), which are fixed in the upper housing (8B) of a drive traction assembly (8) of the inner sphere (4) which accomplishes the "X" lateral movement, and this assembly (8) being equipped with an engine (8A), a reduction gear (8C) with a toothed pulley (8D), and two flat pulleys (8E), whereby the toothed belt is tensioned (8F), which surrounds the vertical ring (4A) of the inner sphere (4) which functions as a large reduction pulley.

## Patentansprüche

1. Durch virtuelle Bewegung beschleunigender kugelförmiger Simulator (1), gebildet durch:
ein kugelförmiges Cockpit (1A), ausgestattet mit einer Anzeigevorrichtung, gebildet durch einen Projektor mit Full HD 3D (D), der ein Spielbild auf einem gekrümmten Bildschirm (E) anzeigt, simulierend eine Frontscheibe, und einer 3D-Kit-Brille;
eine Steuervorrichtung, bestehend aus Kraftrückführungslenkrad, Pedalen, Gangschaltung, Handbremse und Hilfstastatur;
eine Audiovorrichtung mit Soundsystem mit 7.1 Kanälen, um ein Eintauchen in die realistische Soundkulisse zu schaffen;
ein echtes Fahrzeugarmaturenbrett (1B), welches die Echtzeit-Überwachung von Geschwindigkeit, Umdrehung, aktuellem Gang ermöglicht;
Motorsportschalensitze mit 4-Punkt-Sicherheitsgurt (1C);
Kameras und Hauben, die den Luftstrom gemäß der Fahrzeuggeschwindigkeit variieren;
eine strukturelle Basis mit "H"-förmigen Trägern (2), die durch zwei seitliche Stützsäulen gebildet werden, die eine äußere konzentrische Kugel (3) drehbar tragen, die eine innere konzentrische Kugel (4) und das sphärische Cockpit (1A) umgibt und trägt;
wobei eine innere Struktur des sphärischen Cockpits (1A) durch eine kreisförmige Basis (5) gebildet wird, die an die Schnittpunkte der Ringe der inneren konzentrischen Kugel (4) geschraubt sind;
**dadurch gekennzeichnet, dass** ein Bediener in einem (Q) der acht Quadranten des kugelförmigen Cockpits (1A) positioniert ist und ein Navigator (B) in einem zweiten Quadranten (Q1) des kugelförmigen Cockpits (1A) positioniert ist, sodass sowohl der Bediener als auch der Navigator, während sie in der sitzenden Position bleiben, im Wesentlichen in ihren Quadranten sind, wobei sich nur ein Teil ihrer Beine in vorderen unteren Quadranten befindet, da der Kopf unter einem horizontalen mittleren Ring oder auf der gleichen Ebene wie dieser ist, wodurch der Körper veranlasst wird, sich vollständig in die gleiche Richtung zu bewegen;
und dadurch, dass die Drehmechanismen der gyroskopischen Kugeln (3) und (4) eine Fahrantriebsbaugruppe (6) der äußeren Kugel (3) umfassen, die eine Längsbewegung "Y" durchführt, wobei die Baugruppe (6) durch einen Motor (6A) gebildet wird, der an einen unteren Behälter (6B) gekoppelt ist, der im Inneren mit einer Untersetzungsgetriebeeinheit (6C) bereitgestellt wird, die ein Zahnrad (6D), das an den Motor gekoppelt ist, und zwei flache Riemenscheiben (6E) aufweist, wobei sie einen Zahnriemen (6F) durchbohrt und dreht, der den vertikalen Ring (3A) der äußeren Kugel (3) zieht, die als eine große Untersetzungsscheibe fungiert, und wobei solch ein Riemen an seinen Enden an der Oberseite des Rings über zwei Spannschrauben (7) befestigt ist, die im oberen Gehäuse (8B) einer Fahrantriebsbaugruppe (8) der inneren Kugel (4) montiert sind, die "X"-seitliche Bewegung erreicht, und wobei diese Baugruppe (8) mit einem Motor (8A), einem Untersetzungsgetriebe (8C) mit einem Zahnriemen (8D) und zwei flachen Riemenscheiben (8E) ausgestattet ist, wobei der Zahnriemen gespannt ist (8F), der den vertikalen Ring (4A) der inneren Kugel (4) umgibt, die als eine große Untersetzungsscheibe fungiert.

## Revendications

1. Volant sphérique virtuel de mouvement-accélération (1) composé de :
Un cockpit sphérique (1 A) équipée d'un dispositif d'affichage composé d'un projecteur full HD 3D (D) capable d'afficher un jeu vidéo sur un écran incurvé (E) simulant un pare-brise et un kit lunettes 3D ;
un périphérique console, consistant en un volant à retour de force, pédalier, levier de vitesses, frein à main et clavier auxiliaire ;
un périphérique audio Sound system avec 7.1 canaux pour une totale immersion et reproduction de son réaliste ;
un véritable tableau de bord de véhicule (1B), permettant le contrôle de vitesse en temps réel, RPM, équipement courant ;
siège baquet de voiture de course avec 4 boucles de sécurité (1C) ;
caméras et hottes, qui modifient le débit d'air en fonction de la vitesse du véhicule ;
un socle à faisceaux modelés en H (2), formé de deux colonnes d'appui latéral pivotantes soutenant une sphère concentrique extérieure (3) entourant et soutenant une sphère concentrique intérieure (4) et le cockpit (1A);
avec une structure interne du cockpit sphérique (1 A) formée par une base circulaire (5) vissée aux intersections des anneaux de la sphère concentrique intérieure (4) ;
**caractérisé en ce que** l'opérateur est situé sur un (Q) des huit quadrants du cockpit sphérique (1 A) et un navigateur (B) est situé sur un second quadrant (Q1) du cockpit sphérique (1A), afin que l'opérateur et le navigateur, lorsqu'ils reviennent en position assise, soient essentiellement dans leurs quadrants, seule une partie de leurs jambes étant située dans les quadrants avant inférieurs, tête en dessous ou au même niveau comme un anneau central horizontal, impliquant le déplacement entier du corps dans la même direction ;
et ainsi pour les mécanismes de rotation des sphères gyroscopiques (3) et (4) comprend un ensemble de transmission (6) de la sphère extérieure (3) qui réalise un mouvement longitudinal en Y, ledit ensemble (6) formé par un moteur (6A), couplé sur le réservoir inférieur (6B), muni intérieurement d'un motoréducteur (6C) avec une poulie synchrone (6D) couplée sur le moteur et deux poulies plates (6E), qui traversent et font tourner une courroie synchrone (6F), qui poussent l'anneau vertical (3A) de la sphère extérieure (3), qui fonctionnent comme une grande poulie réductrice, et la courroie est fixée à l'extrémité à la partie supérieure de l'anneau par deux tendeurs (7), qui sont fixés au boîtier supérieur (8B) de l'ensemble de transmission (8) de la sphère intérieure (4) qui réalise le mouvement latéral en X, et cet ensemble (8) est équipe d'un moteur (8A), un motoréducteur (8C) avec une poulie synchrone (8D), et deux poulies plates (8E), permettant la tension de la courroie synchrone (8F), qui entoure l'anneau vertical (4A) de la sphère intérieure (4) qui fonctionne comme une grande poulie réductrice.
